Europäisches Patentamt

European Patent Office

Office européen des brevets

(19)

(11) Publication number: **0 084 717**
**B1**

# (12) EUROPEAN PATENT SPECIFICATION

(45) Date of publication of patent specification: **03.09.86**

(21) Application number: **82306672.5**

(22) Date of filing: **14.12.82**

(51) Int. Cl.⁴: **H 02 K 17/36**, H 02 P 7/74

(54) Electrical machine.

(30) Priority: **15.12.81 US 331108**

(43) Date of publication of application:
**03.08.83 Bulletin 83/31**

(45) Publication of the grant of the patent:
**03.09.86 Bulletin 86/36**

(84) Designated Contracting States:
**CH DE FR GB IT LI**

(56) References cited:
**AT-B- 46 682**
**GB-A- 975 102**
**GB-A-1 270 247**
**GB-A-2 043 359**
**US-A-3 017 553**
**US-A-3 539 891**
**US-A-3 571 693**

(73) Proprietor: **THE GARRETT CORPORATION**
**9851-9951 Sepulveda Boulevard P.O. Box 92248**
**Los Angeles, California 90009 (US)**

(72) Inventor: **Kalman, Gabor**
**29422 S., Whitley Collins Drive**
**Palos Verdes California 90274 (US)**
Inventor: **McLean, Graham W.**
**22610, Fern Avenue**
**Torrance California 90505 (US)**

(74) Representative: **Arthur, George Fitzgerald et al**
**KILBURN & STRODE 30, John Street**
**London WC1N 2DD (GB)**

Courier Press, Leamington Spa, England.

## Description

This invention relates generally to rotating electrical machinery, for example an induction motor drive system representing a leading power factor load.

Induction and synchronous motors are essentially constant speed electrical machine. Many industrial, military and traction applications, however, require electric drives with wide speed variations. The requirement of having a wide operating speed range prevented both synchronous and induction alternating current motors from being practical for wide speed range variable speed drives until the recent advent of high-power, solid-state electronic components which have been used to construct line and forced-commutated inverters for variable-voltage, variable-frequency power supplies for AC motor drives. Yet today, even the most successful AC motor drives cannot compete, in terms of initial cost, with traditional DC motor drives used in most variable speed motor applications. The reason for the high cost of AC motor drive systems is that the least expensive inverter, the line-commutated type, and the least expensive motor, the Squirrel-cage induction type, are fundamentally incompatible in terms of their reactive power requirements.

AC induction motors typically operate at a lagging power factor, while line-commutated inverters can function only if the load they supply has a leading power factory. A static inverter, which is capable of supplying lagging power factor loads, must have auxiliary means to force the commutation of the solid-state switching devices which comprises the inverter; hence the name forced-commutated inverter also referred to as self-commutated inverter. The requirement for separate commutation circuitry makes the force-commutated inverter significantly more expensive than a line-commutated inverter having a comparable power rating.

Synchronous motors are capable of operating at a leading power factor and, therefore, are compatible with line-commutated inverters. Below a minimum speed, however, synchronous machines fail to generate sufficient voltage to line-commutate the thyristors in the inverter, which necessitates a special start mode for such machines. In the past, two methods have been used to start synchronous motors operated in conjunction with line-commutated inverters. One method is to provide motor starting by means of a force-commutated inverter that operates only at low speeds when the motor is being started and is disconnected once the speed is sufficiently high to assure line-commutation. A second method is to selectively pulse current into sets of the synchronous machine winding through the inverter, which causes the machine to accelerate until reaching a speed where the generated voltage is sufficient for line-commutation. In the second starting mode, inverter commutation is achieved by quenching the current in the DC link. The shortcomings of the two foregoing methods of starting a synchronous motor are that the first method requires a separate forced-commutated inverter and that the second method produces a relatively low starting torque. The low starting torque results from limitations on the amount of pulse-power that can be transferred through the DC link. In some applications, such as traction drives, the maximum torque demand occurs at starting, which severely limits the utility of starting a synchronous machine by selectively pulsing the machine windings through the inverter. A further problem associated with synchronous motors is the requirement for rotor excitation, which necessitates either slip-rings or a complicated brushless system.

One object of the invention is to provide an AC motor drive system which may include the rugged construction of Squirrel-cage motors and profits from the simplicity of line-commutated inverters.

According to one aspect of the present invention an AC machine cmprising a main induction motor is characterised by the provision of an auxiliary induction motor, the respective rotor windings of the two motors being electrically interconnected, and controllable main and auxiliary inverters for supplying the respective stators of the induction motors, and the auxiliary motor and the auxiliary inverter being arranged to provide reactive power to enable the main inverter to act as a line commutated inverter. Supply may be from a variable DC-link voltage source, such as a controlled rectifier or a chopper-type input inverter. The system may be brushless, with a Squirrel-cage rotor and producing high-starting torque. The invention is suitable for drives having power ratings up to several hundred horsepower and is suitable either for industrial, military or transit use.

The main machine and a smaller auxiliary machine may be installed in a common housing. The rotors of the two machines may be mounted on a common shaft, and both rotors may be of Squirrel-gate construction. The rotor bars of the main machine and the auxiliary machine may be concatenated at the adjoining ends and connected to conventional end rings at the extremities, whereby the main traction motor is supplied from a line-commutated inverter, and the auxiliary machine from an independent self-commutated inverter.

The main machine and the auxiliary machine in the completely brushless cascade configuration of the invention are electrically equivalent to two wound rotor induction motors which are mechanically coupled and electrically concatenated through slip rings. The two polyphase stator windings of the invention are electrically separate and each is supplied from a corresponding variable-voltage variable-frequency inverter.

According to another aspect of the invention a method of driving a line commutated electrical machine is defined by Claim 8.

The system is described in terms of its operation as a motor, but like most electrical machines it can equally well be used in the generating mode.

The invention may be carried into practice in various ways, and certain embodiments will be described by way of example with reference to the accompanying drawings; in which:—

FIGURE 1 is an exploded perspective view of an electrical machine;

FIGURE 2 is a simplified schematic electrical diagram of the machine of FIGURE 1;

FIGURE 3 illustrates a preferred consequential pole change connection between the main auxiliary rotors of FIGURE 1;

FIGURE 4 illustrates phase relationships for the pole connections of FIGURE 3;

FIGURE 5 illustrates the relationships between the rotating magnetic fields of the main machine and the auxiliary machine of FIGURE 1;

FIGURES 6A—6F illustrate relationships between the velocities of the rotating magnetic fields of the main machine and auxiliary machine of FIGURE 1; and

FIGURE 7 is a schematic diagram illustrating the use of the invention in a multi-machine drive system.

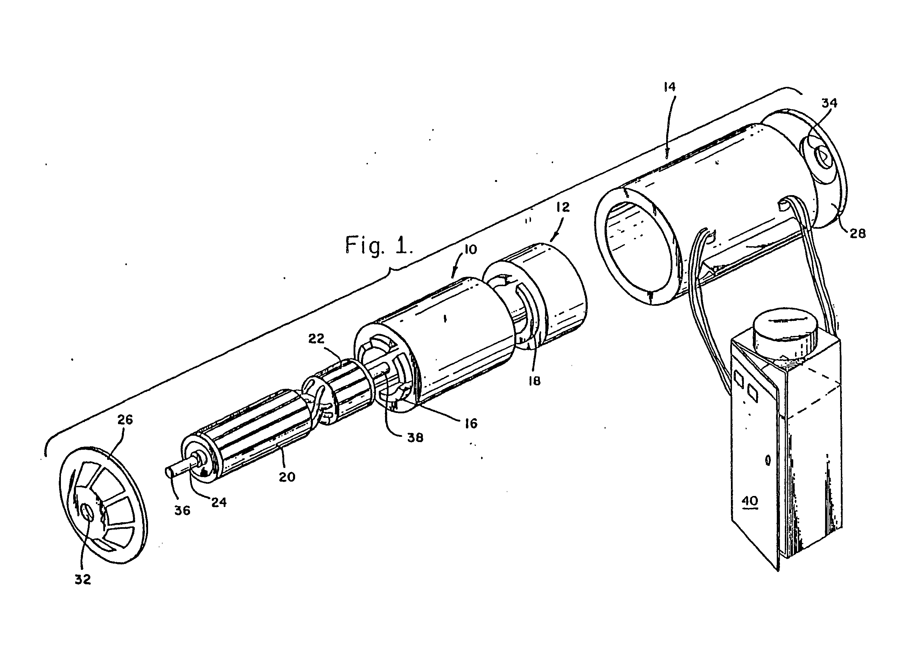

Referring to FIGURE 1, the invention includes a main machine 10 and an auxiliary machine 12, which are installed in a common housing 14. Main machine 10 includes a main stator assembly 16 which includes a plurality of magnetic poles and auxiliary machine 12 includes an auxiliary stator assembly 18, which also includes a plurality of magnetic poles. Main machine 10 further includes a main rotor assembly 20 which is preferably of a Squirrel-cage construction. Auxiliary machine 12 includes an auxiliary rotor assembly 22, also preferably of Squirrel-cage construction; and main rotor assembly 20 and auxiliary rotor assembly 22 are mounted on a common rotor shaft 24.

Main rotor assembly 20 and auxiliary rotor assembly 22 are configured for insertion within main stator assembly 16 and auxiliary stator assembly 18, respectively. Rotor shaft 24 is rotatably mounted within housing 14 by a first end bell 26 and a second end bell 28, which are secured to the ends of housing 14 by appropriate fastening means. End bell 26 has an orifice 32 in the centre portion thereof; and end bell 28 has an orifice 34 in the centre portion thereof in alignment with orifice 32. When end bells 26 and 28 retain main machine 10 and auxiliary machine 12 within machine housing 14, one end 36 rotor of shaft 24 fits within orifice 32; and the other end 38 of rotor shaft 24 fits within orifice 34 through suitable bearings (not shown).

Still referring to FIGURE 1, an inverter housing 40 contains a main inverter (not shown) and an auxiliary inverter (not shown), which are connected to the stators of main machine 10 and auxiliary machine 12, respectively, to supply electrical power thereto.

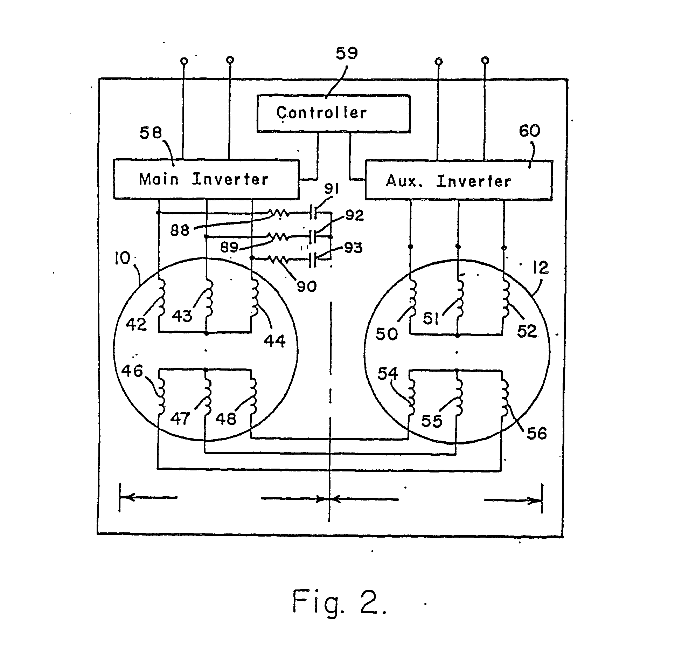

Main machine 10 and auxiliary machine 12 in the illustrated brushless cascade configuration, are electrically equivalent to two wound rotor induction motors which are mechanically coupled and electrically concatenated through their slip rings, as illustrated schematically in FIGURE 2. Main stator assembly 16 is represented by polyphase stator windings 42—44; and main rotor assembly 20 is represented by corresponding polyphase windings 46—48. Similarly, auxiliary stator assembly 18 is represented by polyphase stator windings 50—52; and auxiliary rotor assembly is represented by corresponding polyphase rotor windings 54—56. Main rotor windings 46—48 are electrically concatenated to auxiliary rotor windings 54—56, respectively. Main stator windings 42—44 are connected to a main inverter 58; and auxiliary stator windings 50—52 are connected to an auxiliary inverter 60. A controller 59 is connected between main inverter 58 and auxiliary inverter 60 to regulate the magnitude, frequency and phase of the outputs thereof.

The number of magnetic poles in main machine 10 and auxiliary machine 12 has an important effect on the overall size, weight and cost of the system. The axial lengths of main machine 10 and auxiliary machine 12 are approximately in the ratio of their respective pole numbers. The preferred embodiment includes a consequential pole change connection, which enables the construction of two concatenated Squirrel-cage windings with the ability to select appropriate pole numbers on either machine. If wound rotor machines are used, then it is a simple matter to wind main rotor assembly 20 and auxiliary assembly 22 with the appropriate pole arrangement and pole pair numbers. One major advantage of using an induction motor is that the Squirrel-cage rotor is extremely rugged. In order to construct it, it is necessary to interconnect the Squirrel-cage rotor bars of main rotor assembly 20 and auxiliary rotor assembly 22 to produce the required pole arrangement on both machines. Consequential pole changing is accomplished by dividing the bars of main rotor assembly 20 and auxiliary rotor assembly 22 into N phase-band groups and by connecting each phase-band in auxiliary rotor assembly 22 to a corresponding phase-band in main rotor assembly 20 with the polarity of adjacent phase-bands being opposite. The effect of such connections is a pole-changing action, so that if auxiliary rotor assembly 22 has $P_a$ pole-pairs, then main rotor assembly has $P_a - N/2$ pole-pairs. If N/2 is greater than $P_a$ the pole pair number of main rotor assembly 20 is negative, which produces a travelling wave of $P_a - N/2$ pole-pairs travelling in a negative direction relative to the direction of travel of the wave produced by the pole-pairs $P_a$ of auxiliary rotor 22. Thus an 18 phase-band auxiliary rotor assembly 22 and main rotor assembly 20 with auxiliary rotor assembly 22 having 3, 4, 5, or 6 pole-pairs could by a consequential pole-change on main rotor assembly 20 produce −6, −5, −4, and −3, pole-pairs respectively. In a Squirrel-cage winding, an effective reversal is achieved by transposing the interconnection between cages by an odd number of pole-pitches.

For example, the number of phase-bands required to achieve a 1 to −5 consequential pole change is 12.

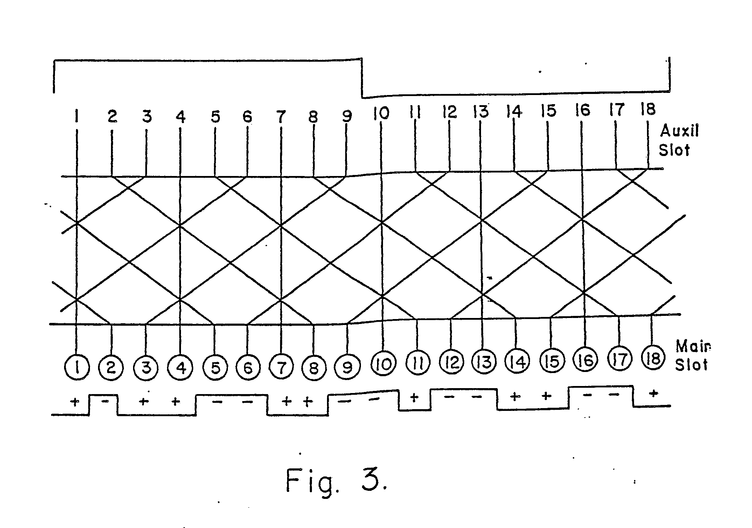

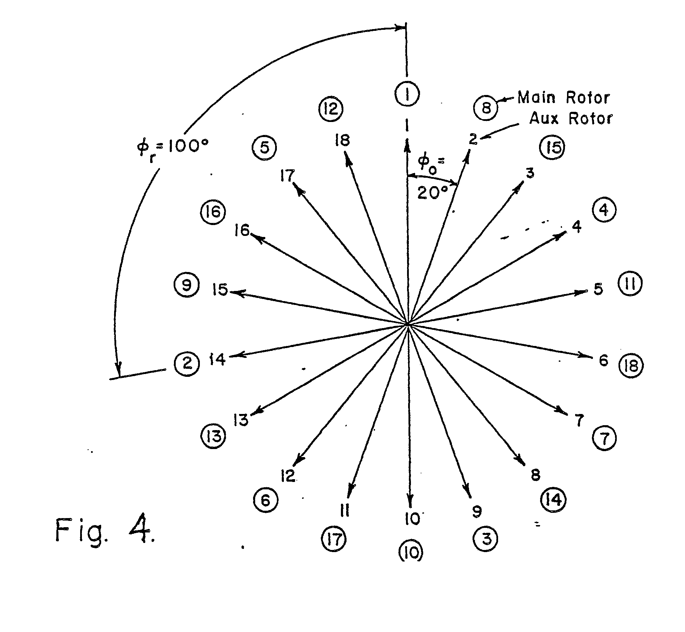

An interleaving technique as shown in FIGURE 3 may be used to achieve a consequential pole-change connection between Squirrel-cage rotors having more than a total of 12 bars. FIGURE 3 illustrates a 1 to −5 pole-pair connection using 18 Squirrel-cage rotor bars. As shown in FIGURE 4, when auxiliary machine 12 has one pole pair, the phase shift per slot is 20°; and the phase shift per slot for the 5 pole-pair main machine 10 is 100°. Similar connections may be made to achieve a 1 to −5 pole-pair change with Squirrel-cage rotors having the number of bars therein equal to a multiple of 6. In general, for a $P_a$ to $P_m$ pole-pair change, wherein $P_a$ is the pole-pair number of auxiliary machine 12 and $P_m$ is the pole-pair number of main machine 10, the number of Squirrel-cage rotor bars must be a multiple of $P_a + P_m$ in order for the interleaving connections to accomplish the desired pole-pair change.

Choice of $P_a$ and $P_m$ can be made to vary the relative axial lengths of the main and auxiliary machines. If, for example, auxiliary machine 12 is a two-pole machine, the operating frequency of auxiliary machine 12 is low, and the reactive volt-ampere which must be supplied by auxiliary inverter 60 is also small. In order to minimise costs, the power rating of auxiliary inverter 60 should be as small as possible; and therefore the system is designed such that main inverter 58 supplies mainly the real power to main stator assembly 16, while auxiliary inverter 60 supplies a small volt-ampere value to magnetise both main machine 10 and auxiliary machine 12 and also supplies or accepts slip-power, less machine losses. These represent the lagging component of load current. Therefore, main inverter 58 may be a simple line-commutated unit, whereas auxiliary inverter 60 will usually require forced commutation. Both main inverter 58 and auxiliary inverter 60 are variable frequency, variable voltage inverters.

FIGURE 3 is a diagrammatic illustration of the invention and may or may not be a three-phase arrangement such as is shown in FIGURE 2. In the example given the value of N is 12.

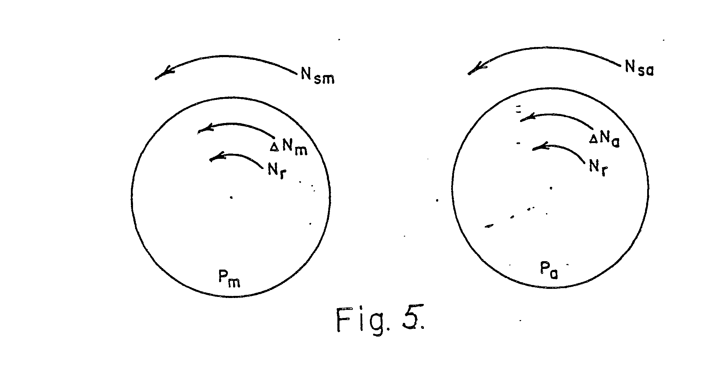

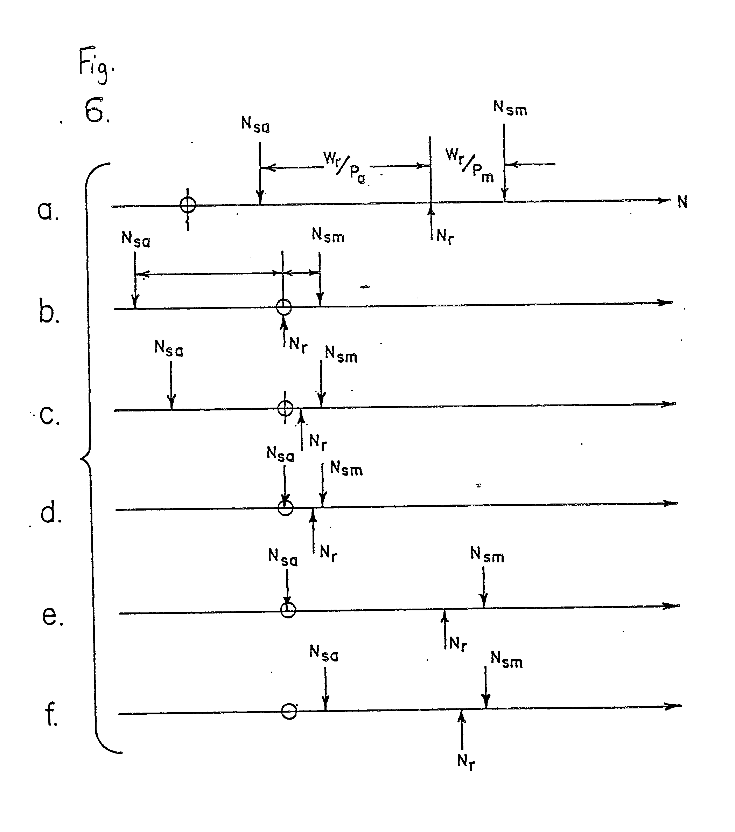

Operation of main machine 10 and auxiliary machine 12 is explained with reference to FIGURE 5. The pole-pair number of main machine 10 is $P_m$, and the pole-pair number of auxiliary machine 12 is $P_a$. The relative phase sequence in main rotor assembly 20 is reversed from that of auxiliary rotor assembly 22. Therefore, a three-phase current $I_r$ at a frequency $w_r$ rad/sec flowing in main rotor assembly 20 produces an m.m.f wave in main machine 10 which rotates at $+w_r/P_m$ rad/sec relative to main rotor assembly 20; and the same current produces an m.m.f. wave rotating at $-w_r/P_a$ relative to auxiliary rotor assembly 22. As an example, if main stator assembly 16 produces 10 poles and auxiliary stator assembly 18 produces 2 poles such that $p_m = 5$ and $P_a = 1$, current

flowing in main rotor assembly 20 at a frequency of 5 Hz with main rotor assembly 20 being stationary, produces a positive rotating m.m.f wave in the air gap of main machine 10 at 60 rpm and a negative rotating m.m.f wave at 300 rpm in the air gap of auxiliary machine 12. The ratio of the speeds of the rotating m.m.f waves in the main machine 10 and auxiliary machine 12 will always be $P_a:P_m$. If rotor shaft 24 rotates at an angular velocity $N_r$ then the m.m.f wave produced by currents in main rotor assembly 20 rotates an at angular velocity of $N_{sm}$ relative to main stator assembly 16; and the m.m.f wave produced by currents in auxiliary rotor assembly 22 rotates at an angular velocity of $N_{sa}$ relative to auxiliary stator assembly 18. FIGURE 6A illustrates the relationship between $N_{sa}$, $N_{sm}$ and $N_r$. It may be seen that the speed $N_r$ of rotor shaft 24 always divides the speed difference between $N_{sm}$ and $N_{sa}$ in the ratio of $P_a:P_m$.

It is well known that in an induction motor with a small air gap, the m.m.f's due to the rotor and stator windings will almost exactly oppose one another; and therefore for the condition represented in FIGURE 6A, the currents in main stator assembly 16 must produce an m.m.f wave at a velocity $N_{sm}$ to oppose that in the main rotor assembly 20; and currents in auxiliary stator assembly 18 must produce m.m.f wave having a velocity $N_{sa}$ to oppose the m.m.f in auxiliary rotor assembly 22. The m.m.f's produced by each of main stator assembly 16 and auxiliary stator assembly 18 are, therefore completely interlinked; and if one of the m.m.f's is known, then the other three m.m.f's are defined thereby. Thus, if the phase of current in main stator assembly 16 is chosen to be unity power factor, then the magnitude and phase of current in main rotor assembly 20 must be such as to produce an m.m.f wave opposing the m.m.f of main stator assembly 16. Once the current in main rotor assembly 20 is known, the m.m.f wave it produces in auxiliary rotor assembly 22 is defined; and the m.m.f of auxiliary stator assembly 18 must oppose the m.m.f of auxiliary rotor assembly 22, which defines both the magnitude and phase of current in auxiliary stator assembly 18. The flux density waves in main machine 10 and auxiliary machine 12 are coupled in a manner similar to that of the m.m.f waves.

It can be shown that the following basic rule applies to the combination of main machine 10 and auxiliary machine 12:

Auxiliary power = (main input power $\times [(N_{sm} − N_r)/N_{sm}]$ − rotor copper loss) $\times [N_{sa}/(N_r − N_{sa})]$.

The above equation shows that when $N_{sa} = 0$, which is the condition for direct current flow in auxiliary stator assembly 18, there is no power transfer through auxiliary inverter 60 apart from copper loss in auxiliary stator assembly 18. In general, for low power transfer through auxiliary inverter, 60, $N_{sa}$ and hence, the frequency of current in auxiliary inverter 60 should be kept as low as possible.

A major problem associated with line-commutated inverters is their inability to operate at low input line voltages, since low input line voltages are insufficient to commutate the current through thyristors which ordinarily comprise line-commutated inverters. Low input line voltages arise if the inverter is supplying a synchronous motor at zero or low speed because the generated line voltage reduces to zero when the rotor is stationary. One major advantage of the present invention over previously known motor drive systems is the ability to produce torque at motor standstill when main inverter 58 is operating at minimum frequency. In such a starting condition, the velocity of each field is represented in FIGURE 6B. When the velocity $N_r$ of rotor shaft 24 is zero, main stator assembly 16 produces a forward going wave having a velocity $N_{sm}$, which has a minimum operating velocity. Auxiliary inverter 60 must therefore, produce a backward going wave having a velocity $N_{sa} = N_{sm}(P_m/P_a)$, which produces the excitation for both main machine 10 and auxiliary machine 12 and which therefore provides the voltage which line-commutates main inverter 58. Assuming that all the input power from main inverter 58 is not consumed in copper losses, the excess power is returned to auxiliary inverter 60; and the resultant reaction torque produces extra starting torque on auxiliary rotor assembly 22, thereby providing high starting torque at rated copper loss.

To accelerate rotor shaft 24, the frequency of current in auxiliary inverter 60 may be reduced as shown in FIGURE 6C with the frequency of main inverter 58 being kept constant or alternatively the frequency of the main inverter can be increased keeping the auxiliary frequency constant. The speed of rotor shaft 24 may be determined since the speed difference between $N_{sm}$ and $N_{sa}$ is always divided in a constant ratio such that $N_{sm} - N_{sa} = P_a/P_m$. The condition when $N_{sa}$ is reduced to zero is shown in FIGURE 6D. When $N_{sa}$ is zero, auxiliary inverter 60 provides direct current to auxiliary stator assembly 16 while all the power comes through main inverter 58. Further increases in rotor speed may be achieved by increasing the frequency of main inverter 58. FIGURE 6E illustrates the case where the frequency of auxiliary inverter is kept at zero (dc) with no power transfer through auxiliary inverter 60. FIGURE 6F illustrates the case where the frequency of auxiliary inverter 60 has increased to produce a positive-going wave wherein some of the power is supplied through auxiliary inverter 60. It is understood that to optimise the performance at any rotor speed an appropriate value of auxiliary and main frequency can be selected.

In general the frequencies of the inverters 58 and 60 are related to each other and to rotor speed, so that if one frequency is left constant, variation of the other frequency varies the rotor speed.

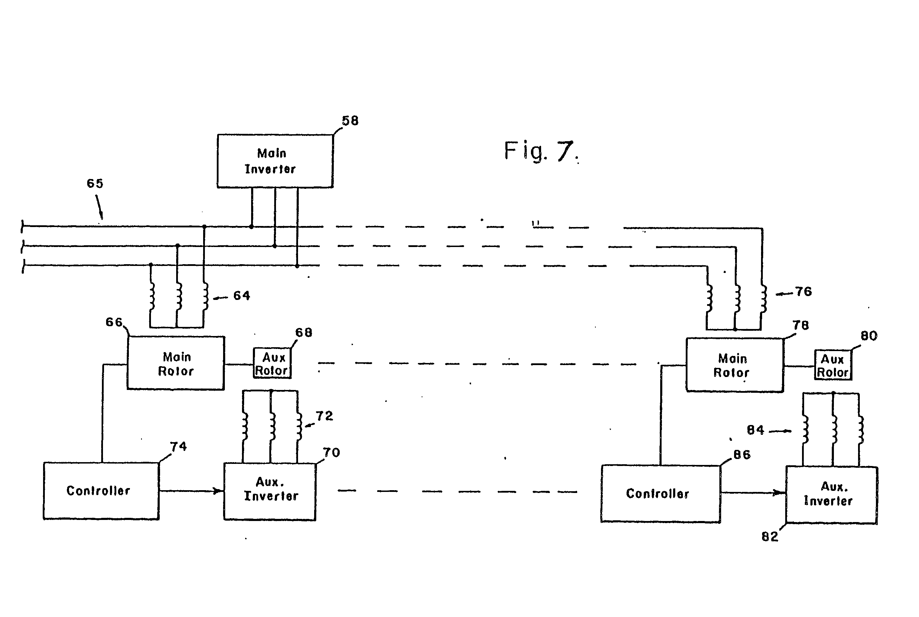

FIGURE 7 illustrates the use of the invention in a multi-machine drive system. Main inverter 58 supplies a three-phase power to a three-phase main stator winding 64 through a power line 65. The current in stator windings 64 produces a magnetic field which induces three-phase current in a main rotor 66, which is connected to an auxiliary rotor 68 as described previously with reference to FIGURES 1 and 3. An auxiliary inverter 70 provides three-phase power to a three-phase auxiliary stator winding 72; and the current therein causes a magnetic field which induces a current in auxiliary rotor 68. A controller 74 is connected between main rotor 66 and auxiliary inverter 70 to regulate the magnitude, frequency and phase of the alternating current output of auxiliary inverter 70. Similarly, a second main stator winding 76 is connected to three-phase power line 65 to receive electrical current from main inverter 58. A second main rotor 78, a second auxiliary rotor 80, a second auxiliary inverter 82, a second auxiliary three-phase stator winding 84, and a second controller 86 are connected together in the same manner as are main rotor 66, auxiliary rotor 68, auxiliary inverter 70, auxiliary three-phase stator windings 72 and slip controller 74 respectively. A plurality of machines can be connected to one main inverter in the manner described above. Each machine of a multi-machine drive system would have a main stator connected to power line 65 and a main rotor, auxiliary rotor, auxiliary inverter, auxiliary stator, and a controller connected as described hereinabove. The invention makes it possible to control the speed of rotors 66, 68 and 78, 80 along with the speeds of rotors of additional machines which may be connected to power line 65, without altering the main inverter frequency. In such a system, the speed of rotors 66, 68 may be varied by changing the phase and frequency of the current output by auxiliary inverter 70 to achieve a desired slip. The rotor speeds of additional machine which may be connected to power line 65 are controlled in like manner.

The leakage inductance of main machine 10 tends to degrade performance thereof during periods of commutation overlap. Referring again to FIGURE 2, in order to provide capacitor-assisted line commutation to reduce commutation reaction and thereby substantially eliminate commutation overlap, there may be inductors 88, 89, 90, in series with respective capacitors 91, 92, 93, connected respectively between the terminals of the stator windings 42, 43, and 44, and a common star point.

The inductors 88, 89, and 90 limit the rate of change of the current therein.

In another method of operating, the shaft 24 can be driven to enable the main machine 10 and auxiliary machine 12 to function as cascade-connected generators.

It may be convenient to summarise the construction and operation of the machine according to FIGURES 1, 2, 3, 4 and 6.

The main and auxiliary Squirrel-cage rotors 20 and 22, have the same number of rotor bars, which is a multiple of 18. Each rotor bar of the auxiliary rotor 22 is connected at its end adjacent to the main rotor 20, to one of the rotor bars of the rotor 20 and the pattern of connection is as shown in FIGURE 3. Thus, for each set of 18 rotor bars on the auxiliary rotor, the first, fourth, seventh, tenth, thirteenth and sixteenth are connected to the aligned rotor bars in the main rotor 20, which are indicated at the lower part of FIGURE 3 by a numeral in a circle. However, the second, fifth, eight, eleventh, fourteenth, and seventeenth, auxiliary rotor bars are connected respectively to the eighth, eleventh, fourteenth, seventeenth, second and fifth rotor bars of the main rotors. The third, sixth, and so on, rotor bars of the auxiliary rotor are connected to the fifteenth, eighteenth and so on, bars of the main rotor, so that the pattern of interconnections is as shown in FIGURE 3.

At the outer end of each rotor, all the rotor bars are connected together in the manner of a conventional Squirrel-cage rotor.

It will be appreciated that the current in an auxiliary rotor bar will be the same as the current in the main rotor bar to which it is connected, and the nature of those currents can be determined by considering excitation of the auxiliary stator winding 18. The pattern of an alternating square wave exciting voltage, from the auxiliary inverter 60 is shown at the top of FIGURE 3, and it will be seen that the currents in rotor bars numbered 1 to 9 are in one sense, while the currents in the rotor bars numbered 10 to 18 flow in the other sense.

Below the numbers of the main rotor bars in FIGURE 3 is indicated the sense of current flow in each bar by a plus sign or a minus sign, and that is derived from the fact that all the bars 1 to 9 of the auxiliary rotor, which are instantaneously subject to a positive exciting field, will be in one direction, whereas all the bars 10 to 18 influenced by a negative exciting field, will flow in the other direction, and the consequence is that one pair of stator poles on the auxiliary machine will induce five pairs of rotor poles in the main machine.

Moreover, consideration of FIGURE 3 will show that as the auxiliary stator field rotates under the action of the auxiliary inverter 60, so that the square wave effectively moves (say to the right) in relation to the auxiliary rotor bars 1 to 18, the five induced main rotor poles will move to the left in FIGURE 3.

The phase shift per slot of the auxiliary rotor is 20 electrical degrees, and the phase shift per slot for the five whole pairs of the main machine shown in FIGURE 3 is 100 electrical degrees, as illustrated diagrammatically in FIGURE 4. Thus, there will be induced in the main rotor a field rotating in the opposite sense from the auxiliary rotor field at a frequency five times the frequency of the auxiliary machine.

It will be clear that by appropriate operation of the main inverter 58, the main machine stator 10 can be excited at an appropriate frequency to interact with the induced rotor frequency described above, and achieve motoring operation. By controlling the main inverter 58, so that the main machine operates at unity or leading power factor, it will be possible to use for the inverter 58 a line commutated invertor, so that for the main machine, the advantages will be achieved of having an economical and robust Squirrel-cage type rotor, and a line commutated stator.

The auxiliary machine will operate at lagging power factor, and so will need a forced commutation invertor at 60, but that can be used merely for supplying the copper losses and magnetising currents and not the main input power, so that large and expensive semi-conductor control devices are not needed in the inverter 60.

In general, the rotor shaft speed Nr, will be between the speeds of the rotating main and auxiliary stator fields in a proportion such that Nsm—Nr will be equal to Pa/Pm(Nr—Nsa).

That is illustrated in FIGURE 6a, with the sense of rotation of both the stator fields, and the rotor shaft being the same.

The O on the line indicating speed represents zero speed, so that if the rotor shaft is not rotating, Nr will coincide with O as shown in FIGURE 6b, and then the main and auxiliary stator fields will rotate in opposite directions as described above for the FIGURE 3 arrangement. FIGURES 6d, e, and f show different operating conditions with different rotor shaft speeds.

In general, the motor speed can be controlled by controlling the frequencies of the excitation provided by the main and auxiliary inverters 58 and 60, or by keeping one frequency constant and varying the other.

**Claims**

1. An electrical machine comprising a main induction motor (10) characterised by the provision of an auxiliary induction motor (12), the respective rotor windings (20, 22) of the two motors being electrically interconnected, and controllable main and auxiliary inverters (58, 60) for supplying the respective stators (16, 18) of the induction motors, the auxiliary motor and the auxiliary inverter being arranged to provide reactive power, to enable the main inverter (58) to act as a line-commutated inverter.

2. A machine as claimed in Claim 1 in which the auxiliary inverter is a forced commutated inverter.

3. A machine as claimed in either of the preceding claims in which the inverters are independently controllable as to frequency, and/or phase relationship and/or amplitude.

4. A machine as claimed in any of the preceding claims in which the rotors are squirrel-cage rotors, with a short-circuiting ring at one end of each rotor conductors, leaving the other ends for interconnection with those of the other rotor, the rotors being mounted on the same shaft (36).

5. A machine as claimed in any of the preceding claims in which the electrical interconnection between the rotor conductors includes transposition connections such that the two rotors have different numbers of pairs of magnetic poles.

6. A machine as claimed in any of the preceding claims including means (88, 93) for controlling overlap in the main inverter.

7. A number of electrical machines each as claimed in any of the preceding claims, with their stators supplied by a common line-commutated main inverter (58) and including a controller (74, 86) for each machine and connected between the main rotor and the auxiliary inverter for that machine.

8. A method of driving a line commutated electrical machine (10) having a squirrel-cage rotor (20) characterised in that reactive power is delivered to the squirrel-cage rotor from an auxiliary induction motor (12) having rotor windings interconnected with those of the said electrical machine to permit line commutation of an inverter (58) for supplying the machine, whereby the stator (18) of the motor is supplied from an auxiliary inverter (60).

**Revendications**

1. Machine électrique comprenant un moteur à induction principal (10), caractérisée par l'utilisation d'un moteur à induction auxiliaire (12), les enroulements de rotor respectifs (20, 22) des deux moteurs étant interconnectés électriquement, et de convertisseurs réglables principal et auxiliaire (58, 60) pour alimenter les stators respectifs (16, 18) des moteurs à induction, le moteur auxiliaire et le convertisseur auxiliaire étant prévus pour fournir une puissance réactive, afin de permettre au convertisseur principal (58) de fonctionner en convertisseur à commutation de ligne.

2. Machine suivant la revendication 1, dans laquelle le convertisseur auxiliaire est un convertisseur à commutation forcée.

3. Machine suivant l'une des revendications précédentes, dans laquelle les convertisseurs sont réglables indépendamment, en ce qui concerne la fréquence et/ ou la relation de phase et/ou d'amplitude.

4. Machine suivant l'une quelconque des revendications précédentes, dans laquelle les rotors sont des rotors à cage d'écureuil, comportant un anneau de court-circuit à une extrémité de chacun des conducteurs de rotor, les autres extrémités servant à l'interconnexion avec les conducteurs de l'autre rotor, les rotors étant montés sur le même arbre (36).

5. Machine suivant l'une quelconque des revendications précédentes, dans laquelle l'interconnexion électrique entre les conducteurs de rotor comprend des connexions de transposition, de sorte que les deux rotors possèdent des nombres différents de paires de pôles magnétiques.

6. Machine suivant l'une quelconque des revendications précédentes, comprenant des moyens (88, 93) de commande du chevauchement dans le convertisseur principal.

7. Pluralité de machines électriques, chaque machine étant telle que revendiqué dans l'une quelconque des revendications précédentes, leurs stators étant alimentés par un convertisseur principal commun (58) à commutation de ligne, un dispositif de commande (74, 86) étant prévu pour chaque machine et connecté entre le rotor principal et le convertisseur auxiliaire pour cette machine.

8. Procédé de commande d'une machine électrique (10) à commutation de ligne comportant un rotor à cage d'écureuil (20), caractérisé en ce que la puissance réactive est fournie au rotor à cage d'écureuil à partir d'un moteur à induction auxiliaire (12) comportant des enroulements de rotor interconnectés avec ceux de ladite machine électrique, pour permettre la commutation de ligne d'un convertisseur (58) d'alimentation de la machine, de sorte que le stator (18) du moteur (12) est alimenté à partir d'un convertisseur auxiliaire (60).

**Patentansprüche**

1. Elektrische Machine mit einem Hauptinduktionsmotor (10), dadurch gekennzeichnet, daß ein Hilfsinduktionsmotor (12) vorgesehen ist, daß die entsprechenden Rotorwicklungen (20, 22) der beiden Motoren elektrisch miteinander verbunden sind, und daß steuerbare Haupt- und Hilfsinverter (58, 60) zum Speisen der entsprechenden Statoren (16, 18) der Induktionsmotoren vorgesehen sind, wobei Hilfsmotor und Hilfsinverter so ausgelegt sind, daß sie eine reaktive Leistung ergeben, damit der Hauptinverter (58) als ein leitungskommutierter Inverter wirkt.

2. Maschine nach Anspruch 1, bei der der Hilfsinverter ein zwangskommutierter Inverter ist.

3. Maschine nach Anspruch 1 oder 2, dadurch gekennzeichnet, daß die Inverter unabhängig voneinander in bezug auf Frequenz und/oder Phasenlage und/oder Amplitude steuerbar sind.

4. Maschine nach einem der vorausgehenden Ansprüche, dadurch gekennzeichnet, daß die Rotoren Wirbelstromkäfig-Rotoren mit einem Kurzschlußring am einen Ende eines jeden Rotorleiters sind, wobei die anderen Enden zur Verbindung mit den Leitern des anderen Rotors verbleiben, und wobei die Rotoren auf der gleichen Welle (36) befestigt sind.

5. Maschine nach einem der vorausgehenden Ansprüche, dadurch gekennzeichnet, daß die elektrische Verbindung zwischen den Rotorleitern Transpositionsverbindungen aufweist, derart, daß die beiden Rotoren unterschiedliche Anzahl von Paaren von Magnetpolen haben.

6. Maschine nach einem der vorausgehenden Ansprüche, gekennzeichnet durch Mittel (88, 93) zur Steuerung der Überlappung im Hauptinverter.

7. Eine Anzahl von elektrischen Maschinen, deren jede nach einem der vorausgehenden Ansprüche ausgebildet ist, dadurch gekennzeichnet, daß ihre Statoren von einem gemeinsamen zeilenkommutierten Hauptinverter (58) gespeist sind und ein Steuergerät (74, 86) für jede Maschine aufweisen sowie zwischen Hauptrotor und Hauptinverter für diese Maschine eingeschaltet sind.

8. Verfahren zum Antrieb einer leitungskommutierten elektrischen Maschine (10) mit einem Wirbelstromkäfigrotor (20), dadurch gekennzeichnet, daß reaktive Leistung an den Wirbelstromkäfigrotor aus einem Hilfsinduktionsmotor (12) abgegeben wird, der Rotorwicklungen aufweist, die mit denen der elektrischen Maschine verbunden sind, um eine Leitungskommutierung eines Inverters (58) für die Speisung der Maschine zu erhalten, wobei der Stator (18) des Motors (12) aus einem Hilfsinverter (60) gespeist wird.

Fig. 1.

0 084 717

Fig. 2.

2

Fig. 3.

Fig. 4.

Fig. 5.

0 084 717

Fig. 6.

6

# Fig. 7.